# EUROPÄISCHE PATENTANMELDUNG

(11) **EP 4 627 914 A1**
(43) Veröffentlichungstag der Anmeldung: **08.10.2025**
(21) Anmeldenummer: 24168655.9
(22) Anmeldetag: 05.04.2024
(51) Int. Cl.: A01K 27/00

(54) **ROLLLEINENVORRICHTUNG FÜR DAS AB- UND AUFROLLEN EINER TIERLEINE**

(71) Anmelder: Diligent Verwaltung GmbH, 51063 Köln (DE)
(72) Erfinder: TRAXLER, Christoph, 36093 Künzell (DE)
(74) Vertreter: Zenz Patentanwälte Partnerschaft mbB

(57) **Zusammenfassung**

Die Erfindung betrifft eine Rollleinenvorrichtung (1) für eine Tierleine (2), welche ein Gehäuse (3), einen Spulenkörper (9), welcher drehbar an dem Gehäuse (3) gelagert ist, und ein Federsystem (10) aufweist, welches den Spulenkörper (9) in eine Aufrollposition, in welcher die Tierleine (2) auf dem Spulenkörper (9) aufgewickelt angeordnet ist, zurückdrängend ausgebildet ist und welches mit einer ersten Rückholkraft und mit einer zweiten Rückholkraft ausgebildet ist, wobei das Federsystem (10) derart ausgebildet ist, dass der Spulenkörper (9) aus der Aufrollposition heraus gegen die erste Rückholkraft für einen ersten Abwickelungsweg der Tierleine (2), welcher durch eine festgelegte Anzahl an Umdrehungen des Spulenkörpers (9) definiert ist, drehbar ist und dass der Spulenkörper (9) gegen die zweite Rückholkraft, welche größer als die erste Rückholkraft ist, für einen zweiten Abwickelungsweg der Tierleine (2), welcher sich an den ersten Abwickelungsweg anschließt und welcher durch eine festgelegte Anzahl an Umdrehungen des Spulenkörpers (9) definiert ist, drehbar ist.

## Beschreibung

Die Erfindung richtet sich auf eine Rollleinenvorrichtung für das Ab- und Aufrollen einer Tierleine, wobei die Rollleinenvorrichtung ein Gehäuse, einen Spulenkörper, welcher drehbar an dem Gehäuse gelagert ist, und ein Federsystem aufweist, welches den Spulenkörper in eine Aufrollposition, in welcher die Tierleine auf dem Spulenkörper aufgewickelt angeordnet ist, zurückdrängend oder zurückhaltend ausgebildet ist und welches mit einer Rückholkraft ausgebildet ist, wobei das Federsystem derart ausgebildet ist, dass der Spulenkörper aus der Aufrollposition heraus gegen die Rückholkraft für einen Abwickelungsweg der Tierleine drehbar ist.

Eine derartige Rollleinenvorrichtungen wird üblicherweise auch als Flex-Leine oder als selbstaufrollende Tierleine bezeichnet. Bekannte Flex-Leinen bestehen meist aus einer Tierleine bzw. einem Band, welches auf einem Spulenkörper an einem gehäuseartigen Handgriff aufgewickelt ist. Am Ende der Tierleine bzw. des Bandes ist ein Karabinerhaken angeordnet, an welchem ein Halsband des auszuführenden Tieres befestigt wird. Der Spulenkörper weist eine Spiralfeder auf, welche die Tierleine selbsttätig aufrollt, wenn das Tier zu seinem Besitzer bzw. zu dem Leinenführer zurückläuft.

Läuft das Tier weit genug von dem Leinenführer und damit von der Rollleinenvorrichtung weg, so dass die Tierleine vollständig von dem Spulenkörper abgewickelt wird, oder betätigt der Leinenführer einen Stoppknopf am Handgriff der Rollleinenvorrichtung, welcher die Tierleine blockiert, so kann es vorkommen, dass das Tier einen abrupten Ruck am Hals erfährt und der Leinenführer den gleichen Ruck an der Hand oder in seinem Arm spürt, wobei hierbei dem Tier sogar Verletzungen zugefügt werden können. Zumindest ist der abrupte Ruck am Hals unangenehm, zumal dieser Ruck für das Tier vollkommen überraschend kommt, da das Tier sonst eine nur schwache Kraft der Tierleine spürt.

Um den unangenehmen Ruck zumindest abzudämpfen, sind sogenannte "Schockabsorber" bekannt. Diese Schockabsorber sind als kurze, elastische Verlängerungsstücke für die Tierleine ausgebildet, wobei sich der Schockabsorber, wenn der Stoppknopf gedrückt oder das Leinenende erreicht wird, um etwa 15cm elastisch dehnt und dabei den Ruck abdämpft. Jedoch ist diese Art der Dämpfung unzureichend, um einem schnell weglaufenden Tier eine gewisse Reaktionszeit für das Verlangsamen zu geben. Wesentlich länger als die genannten 15cm darf der Schockabsorber sich nicht dehnen, sonst würde der Zweck der Tierleine nicht erfüllt.

Ein weiterer Nachteil der heute marktüblichen Tierleinen ist der Folgende. Wenn das Tier zum Leinenführer zurückläuft, während der Leinenführer einen Stoppknopf gedrückt hält, so ist auch der Aufwickelmechanismus blockiert. Es kommt dann dazu, dass die Tierleine auf dem Boden aufliegt und dabei verschmutzen kann.

Der Erfindung liegt die Aufgabe zugrunde, eine Lösung zu schaffen, die auf konstruktiv einfache Weise und kostengünstig eine vereinfachte, verbesserte und effektivere Rollleinenvorrichtung bereitstellt und die bekannten Nachteile vermeidet.

Diese Aufgabe wird erfindungsgemäß gelöst durch eine Rollleinenvorrichtung für das Ab- und Aufrollen einer Tierleine mit den Merkmalen gemäß dem Patentanspruch 1.

Die erfindungsgemäße Rollleinenvorrichtung für das Ab- und Aufrollen einer Tierleine weist ein Gehäuse, einen Spulenkörper, welcher drehbar an dem Gehäuse gelagert ist, und ein Federsystem auf, welches den Spulenkörper in eine Aufrollposition, in welcher die Tierleine auf dem Spulenkörper aufgewickelt angeordnet ist, zurückdrängend oder zurückhaltend ausgebildet ist und welches mit einer ersten Rückholkraft und mit einer zweiten Rückholkraft ausgebildet ist, wobei das Federsystem derart ausgebildet ist, dass der Spulenkörper aus der Aufrollposition heraus gegen die erste Rückholkraft für einen ersten Abwickelungsweg der Tierleine, welcher durch eine festgelegte Anzahl an Umdrehungen des Spulenkörpers definiert ist, drehbar ist und dass der Spulenkörper gegen die zweite Rückholkraft, welche größer als die erste Rückholkraft ist, für einen zweiten Abwickelungsweg der Tierleine, welcher sich an den ersten Abwickelungsweg anschließt und welcher durch eine festgelegte Anzahl an Umdrehungen des Spulenkörpers definiert ist, drehbar ist. Das Federsystem ist somit mit einer ersten Rückholkraft und einer zweiten und im Vergleich zur ersten Rückholkraft stärkeren Rückholkraft ausgebildet.

Vorteilhafte und zweckmäßige Ausgestaltungen und Weiterbildungen der Erfindung ergeben sich aus den entsprechenden Unteransprüchen.

Durch die Erfindung wird eine Rollleinenvorrichtung bereitgestellt, mit welcher auf konstruktiv einfache Weise die vorstehend genannten Probleme gelöst werden. Denn bei der erfindungsgemäßen, selbstaufwickelnden Rollleinenvorrichtung erfährt das Tier beim Weglaufen und damit Abwickeln der Tierleine von dem Spulenkörper bis nahezu zu dem Ende des zweiten Abwickelungswegs keinen harten Ruck. Stattdessen kommt erfindungsgemäß zunächst eine erste Rückholkraft über den ersten Abwickelungsweg und anschließend eine spürbar stärkere, zweite Rückholkraft für den zweiten Abwickelungsweg zum Tragen, bevor nach einer deutlichen weiteren Abwicklung und dem Erreichen des Endes des zweiten Abwickelungswegs das "harte Ende" und damit der Ruck erfolgt. Das Tier verbindet somit nach einer Anlernphase die zunächst stärkere, zweite Rückholkraft mit dem folgenden Ruck am Leinenende, so dass das Tier diesen unangenehmen Ruck zu vermeiden lernt.

Die Erfindung sieht in vorteilhafter Ausgestaltung der Rollleinenvorrichtung vor, dass das Federsystem eine erste Rückholfeder, welche die erste Rückholkraft aufweist und welche mit einem ersten Ende mit dem Gehäuse verbunden ist, und eine zweite Rückholfeder, welche die zweite Rückholkraft aufweist und welche mit einem ersten Ende mit dem Spulenkörper verbunden ist, aufweist, wobei die erste Rückholfeder und die zweite Rückholfeder über eine Kopplungsvorrichtung kaskadiert miteinander gekoppelt sind. Die erfindungsgemäße Kaskadierung der ersten Rückholfeder und zweiten Rückholfeder bewirkt, dass bei einem Abrollvorgang der Tierleine zunächst die erste Rückholfeder mit der schwächeren Rückholkraft und anschließend die zweite Rückholfeder mit der stärkeren Rückholkraft dem Zug der Tierleine entgegenwirken, so dass dem Tier durch die Rückholkraft der zweiten Rückholfeder das Leinenende spürbar signalisiert wird.

Von besonderem Vorteil ist es in Ausgestaltung der Erfindung, wenn die erste Rückholfeder als eine Konstantkraftfeder ausgebildet ist und/oder die zweite Rückholfeder als eine Konstantkraftfeder ausgebildet ist. Durch die Verwendung einer Konstantkraftfeder empfindet das weglaufende Tier keinen ständigen und mit zunehmender Entfernung zum Leinenführer ansteigenden Zug am Hals, denn eine derartige Konstantkraftfeder übt über eine große Anzahl von Umdrehungen des Spulenkörpers und damit über den gesamten Abwickelungsweg eine nahezu konstante Rückholkraft aus. Mit "Konstantkraftfeder" ist im Sinne der Erfindung eine typische Bauweise von spiralförmigen "Rückholfedern", wie zum Beispiel bei selbstaufrollenden Kabelrollen von Staubsaugern oder als Gewichtsentlastung von Standbohrmaschinen und ähnlichen Geräten, gemeint. Diese Konstantkraftfedern haben eine annähernd konstante Rückholkraft, da sie zwar beim "Spannen" die für die Rückholarbeit benötigte Energie in Form verengter Federwindungen speichern, die momentane Kraft jedoch nur von wenigen dieser Windungen stammt. Beim "Entspannen" wird die komplette Feder in ihre Ursprungsform zurückverformt, in jedem Moment dabei wirkt aber jeweils nur eine "Federschlinge" mit ihrer Kraft in der Aufwickelrichtung, so dass das relevante Drehmoment annähernd konstant ist. Dieses Federprinzip wird auch in mechanischen Uhrwerken eingesetzt.

Eine konstruktiv besonders geschickte Möglichkeit zur Kaskadierung der ersten und zweiten Rückholfeder ist in Ausgestaltung der Erfindung dadurch gegeben, dass die Kopplungsvorrichtung eine Welle aufweist, welche an dem Gehäuse freidrehend gelagert ist, wobei ein zweites Ende der ersten Rückholfeder mit der Welle verbunden ist, und wobei ein zweites Ende der zweiten Rückholfeder mit der Welle verbunden ist.

In Ausgestaltung der Erfindung ist es für die Kaskadierung des Federsystems von besonderem, konstruktivem Vorteil, wenn bei einer Bewegung entlang des ersten Abwickelungswegs der Spulenkörper gegen die erste Rückholkraft bewegend ausgebildet ist, und wobei bei einer Bewegung entlang des ersten Abwickelungswegs die Welle eine Abrollkraft des Spulenkörpers über die zweite Rückholfeder auf die erste Rückholfeder übertragend ausgebildet ist, und wobei bei einer Bewegung entlang des ersten Abwickelungswegs die zweite Rückholfeder derart ausgebildet ist, dass sich die zweite Rückholfeder gemeinsam mit dem Spulenkörper bewegt.

Die Erfindung sieht in weiterer Ausgestaltung vor, dass die Kopplungsvorrichtung eine Steuervorrichtung aufweist, welche einen Wechsel von dem ersten Abwickelungsweg zu dem zweiten Abwickelungsweg steuernd ausgebildet ist und welche einen mit der Welle drehfest verbundenen Steuerkörper und einen an dem Gehäuse gelagerten Sperrkörper aufweist, wobei der Sperrkörper in eine Grundposition, in welcher der Sperrkörper eine Bewegung des Steuerkörpers relativ zu dem Gehäuse freigebend angeordnet ist, und in eine Sperrposition, in welcher der Sperrkörper eine Bewegung des Steuerkörpers relativ zu dem Gehäuse blockierend angeordnet ist, bewegbar ausgebildet ist. Mit Hilfe der Steuervorrichtung ist damit ein automatischer Wechsel realisiert, ohne dass der Leinenführer bzw. Bediener tätig werden muss.

Hinsichtlich einer kompakten Konstruktion ist es in weiterer Ausgestaltung der Erfindung von Vorteil, wenn entlang des ersten Abwicklungswegs der Spulenkörper, die zweite Rückholfeder und der Steuerkörper sich gemeinsam bewegend und/oder drehend ausgebildet sind.

Ebenso ist es für eine kompakte Konstruktion vorteilhaft, wenn in Ausgestaltung der Erfindung entlang des ersten Abwicklungswegs der Sperrkörper in der Grundposition angeordnet ist, und wobei bei dem Wechsel von dem ersten Abwickelungsweg zu dem zweiten Abwickelungsweg der Sperrkörper in der Sperrposition angeordnet ist und der Spulenkörper gegenüber dem Gehäuse feststehend angeordnet ist und der Steuerkörper weiterhin drehbar gelagert ist.

Für einen automatischen Übergang vom ersten zum zweiten Abwickelungswegs, so dass nach der ersten Rückholkraft die zweite und stärkere Rückholkraft dem weglaufenden Tier entgegenwirkt, ist in weiterer Ausgestaltung der Erfindung vorgesehen, dass die Kopplungsvorrichtung eine Steuermechanik aufweist, welche bei einem Erreichen eines Endes des ersten Abwicklungsweges den Sperrkörper aus der Grundposition in die Sperrposition bewegend ausgebildet ist.

Zur Erhöhung der Flexibilität der erfindungsgemäßen Rollleinenvorrichtung sieht die Erfindung in einer weiteren Ausgestaltung vor, dass die Steuermechanik ein Einstellmittel aufweist, welches derart ausgebildet ist, dass das Ende des ersten Abwickelungswegs von einem Bediener bzw. dem Leinenführer verstellbar ist. Damit kann zum Beispiel der erste Abwicklungsweg kürzer eingestellt werden, um ein zu weites Entfernen des Tieres vom Leinenführer zu unterbinden.

Damit bei der erfindungsgemäßen Rollleinenvorrichtung auch die Möglichkeit gegeben ist, dass der Leinenführer vor dem Erreichen des ersten Abwicklungswegs dem Tier das Ende der Tierleine durch die zweite Rückholkraft signalisiert, ist in einer Ausgestaltung vorgesehen, dass die Kopplungsvorrichtung einen von einem Bediener betätigbar ausgebildeten Steuerschalter aufweist, welcher mit dem Sperrkörper derart bewegungsgekoppelt ist, dass eine Betätigung des Steuerschalters vor einem Erreichen eines Endes des ersten Abwickelungswegs den Sperrkörper aus der Grundposition in die Sperrposition bewegend ausgebildet ist. Der Steuerschalter ist dabei an dem Gehäuse angeordnet.

Zur Vermeidung einer Beschädigung der Rollleinenvorrichtung ist in weiterer Ausgestaltung der Erfindung vorgesehen, dass eine Blockierungsvorrichtung vorgesehen ist, welche eine Blockierungsmechanik und einen Blockierungskörper aufweist, wobei der Blockierungskörper an dem Steuerkörper zwischen einer Freigabeposition, in welcher der Spulenkörper relativ zu dem Steuerkörper drehbar gelagert ist, und einer Blockierungsposition, in welcher eine Bewegung des Spulenkörpers relativ zu dem Steuerkörper blockiert ist, bewegbar gelagert ist, und wobei die Blockierungsmechanik bei einem Erreichen eines Endes des zweiten Abwicklungswegs den Blockierungskörper aus der Freigabeposition in die Blockierungsposition bewegend ausgebildet ist. Ein weiteres Abrollen der Tierleine bis zum Ende der Tierleine wird auf diese Weise vermieden, wobei die Blockierung durch die Blockierungsmechanik automatisch und ohne ein Einwirken des Leinenführers erfolgt.

Unabhängig davon, ob ein Abrollen der Tierleine auf dem ersten oder zweiten Abwicklungsweg stattfindet, bietet die Erfindung dem Leinenführer die Möglichkeit, ein weiteres Abwickeln der Tierleine zu blockieren, wobei zu diesem Zweck in weiterer Ausgestaltung vorgesehen ist, dass ein von einem Bediener betätigbar ausgebildeter und an dem Gehäuse gelagerter Blockierungsschalter vorgesehen ist, welcher mit einem an dem Gehäuse gelagerten Blockierungsmittel derart bewegungsgekoppelt ist, dass eine Betätigung des Blockierungsschalters vor einem Erreichen eines Endes des zweiten Abwickelungswegs das Blockierungsmittel aus einer Neutralstellung, in welcher das Blockierungsmittel eine Bewegung des Spulenkörpers relativ zu dem Gehäuse erlaubend angeordnet ist, in eine Blockierungsstellung, in welcher das Blockierungsmittel eine Bewegung des Spulenkörpers relativ zu dem Gehäuse blockierend angeordnet ist, bewegend ausgebildet ist.

Schließlich ist in Ausgestaltung der Erfindung vorgesehen, dass ein von einem Leinenführer bzw. Bediener betätigbar ausgebildeter und an dem Gehäuse bewegbar gelagerter Bremsschalter mit einem Bremsmittel vorgesehen ist, wobei der Bremsschalter zwischen einer Ruhestellung, in welcher das Bremsmittel beabstandet zu dem Spulenkörper angeordnet ist, und einer Bremsstellung, in welcher das Bremsmittel gegen den Spulenkörper drückend angeordnet ist, bewegbar an dem Gehäuse gelagert ist. Mit Hilfe des Bremsschalters hat der Bediener bzw. Leinenführer jederzeit und über den ersten und zweiten Abwickelungsweg die Möglichkeit, die Geschwindigkeit des weglaufenden Tiers über die Abrollgeschwindigkeit über die Rückholkräfte des Federsystems hinaus zu reduzieren.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaft bevorzugtes Ausführungsbeispiel der Erfindung dargestellt ist.

In der Zeichnung zeigt:
Figur 1 eine Draufsicht auf eine erfindungsgemäße Rollleinenvorrichtung mit einer Tierleine,
Figur 2 eine Perspektivansicht auf die in Figur 1 gezeigte Rollleinenvorrichtung ohne die Tierleine,
Figur 3 eine Perspektivansicht auf die in Figur 2 gezeigte Rollleinenvorrichtung, wobei ein Teil eines Gehäuses der Rollleinenvorrichtung weggelassen ist,
Figur 4 eine Perspektivansicht auf die in Figur 3 gezeigte Rollleinenvorrichtung, wobei ein weiterer Teil des Gehäuses und ein Einstellmittel der Rollleinenvorrichtung weggelassen sind,
Figur 5 eine Perspektivansicht auf die erfindungsgemäße Rollleinenvorrichtung, wobei das Gehäuses der Rollleinenvorrichtung weggelassen ist, um eine Steuervorrichtung mit einem Steuerkörper und eine Blockierungsvorrichtung zu zeigen,
Figur 6 eine Perspektivansicht auf die erfindungsgemäße Rollleinenvorrichtung aus Figur 5, wobei die Steuervorrichtung und der Steuerkörper weggelassen sind und dadurch ein Spulenkörper zu sehen ist,
Figur 7 eine zum Teil geschnittene Perspektivansicht der erfindungsgemäßen Rollleinenvorrichtung,
Figur 8 eine weitere zum Teil geschnittene Perspektivansicht der erfindungsgemäßen Rollleinenvorrichtung,
Figur 9 eine perspektivische Explosionsdarstellung der erfindungsgemäßen Rollleinenvorrichtung,
Figur 10 eine weitere, perspektivische Explosionsdarstellung der Rollleinenvorrichtung,
Figur 11 eine Draufsicht auf die Steuervorrichtung mit dem Steuerkörper und die Blockierungsvorrichtung, wenn der Spulenkörper in einer Aufrollposition angeordnet ist,
Figur 12 eine Draufsicht auf die Steuervorrichtung mit dem Steuerkörper und die Blockierungsvorrichtung, wenn ein Ende eines ersten Abwickelungswegs erreicht ist,
Figur 13 eine Draufsicht auf die Steuervorrichtung mit dem Steuerkörper und die Blockierungsvorrichtung, wenn für einen alternativen Fall das Ende des ersten Abwickelungswegs erreicht ist,
Figur 14 eine Draufsicht auf die Blockierungsvorrichtung, wenn das Ende des ersten Abwickelungswegs erreicht ist,
Figur 15 eine Draufsicht auf die Blockierungsvorrichtung, wenn ein Ende des eines zweiten Abwickelungswegs erreicht ist,
Figur 16 eine Perspektivansicht auf die Rollleinenvorrichtung, bei welcher ein Steuerschalter von einem Bediener halbgedrückt betätigt ist,
Figur 17 eine Draufsicht auf die Steuervorrichtung mit dem Steuerkörper, wenn der Steuerschalter von einem Bediener halbgedrückt betätigt ist,
Figur 18 eine Perspektivansicht auf die Rollleinenvorrichtung, bei welcher ein Blockierungsschalter von einem Bediener vollgedrückt betätigt ist,
Figur 19 eine Draufsicht auf die Blockierungsvorrichtung, wenn der Blockierungsschalter von einem Bediener vollgedrückt betätigt ist,
Figur 20 eine Perspektivansicht auf die Rollleinenvorrichtung, bei welcher ein Bremsschalter von einem Bediener betätigt ist, und
Figur 21 eine Perspektivansicht auf den Spulenkörper, wobei ein Bremsmittel gegen den mit dem Bremsschalter gekoppelter Spulenkörper drückt.

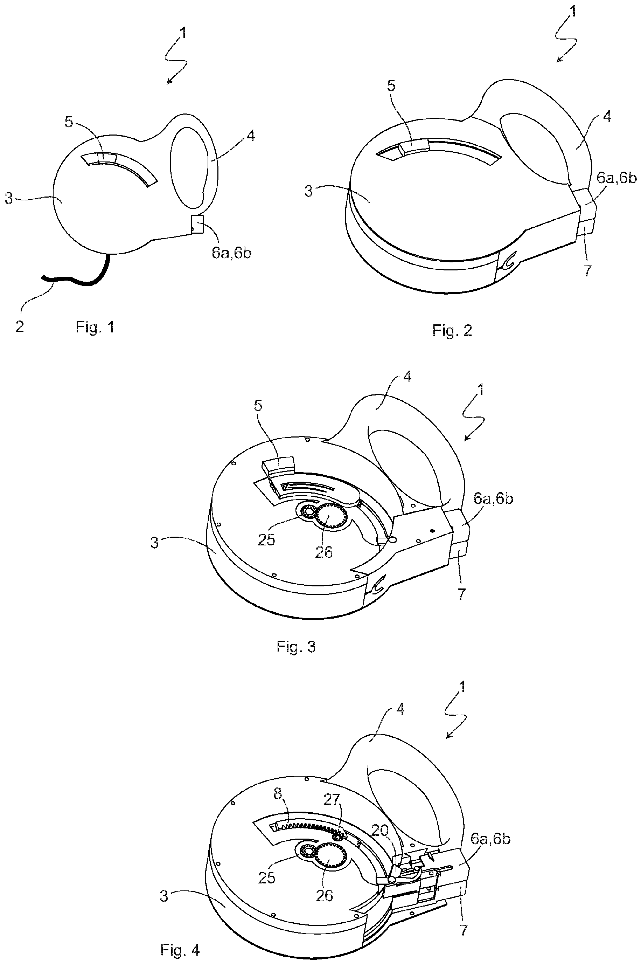

In den Figuren 1 und 2 ist eine erfindungsgemäße Rollleinenvorrichtung 1 für das Ab- und Aufrollen einer Tierleine 2 dargestellt, wobei die Figur 1 eine Draufsicht auf die Rollleinenvorrichtung 1 mit der Tierleine 2 zeigt, wohingegen in Figur 2 eine Perspektivansicht auf die Rollleinenvorrichtung 1 zu sehen ist und die Tierleine 2 weggelassen ist. Die Rollleinenvorrichtung 1 weist ein Gehäuse 3 auf, wobei in dem gezeigten Ausführungsbeispiel an dem Gehäuse 3 ein Handgriff 4 angeformt ist. Ferner ist auf einer Seitenfläche des Gehäuses 3 eine Ausnehmung 5 zu erkennen, in welche ein Einstellmittel 5 angeordnet ist. Das Einstellmittel 5 dient dazu, dass ein Leinenführer bzw. ein Bediener die Länge eines ersten Abwickelungsweges der Tierleine 2 einstellen kann, worauf nachstehend aber noch im Detail eingegangen wird. Ferner sind aus den Figuren 1 und 2 ein Steuerschalter bzw. Blockierungsschalter 6 und ein Bremsschalter 7 ersichtlich, die an den Handgriff 4 angrenzend an dem Gehäuse 3 angeordnet sind. Auch auf die Funktion des Steuerschalters bzw. Blockierungsschalters 6 und des Bremsschalters 7 wird nachstehend noch eingegangen werden.

Nachfolgend wird Bezug auf die Figuren 3 bis 10 genommen und der Aufbau der erfindungsgemäßen Rollleinenvorrichtung 1 näher beschrieben. Die Figuren 3 und 4 zeigen nochmals perspektivische Ansichten der Rollleinenvorrichtung 1, wobei in Figur 3 ein Gehäuseteil entfernt wurde, so dass das Einstellmittel 5 besser erkennbar ist, wohingegen in Figur 4 das Einstellmittel 5 entfernt wurde, um eine unter dem Einstellmittel 5 liegend angeordnete Zahnstange 8 zu zeigen, mit welcher das Einstellmittel 5 zusammenwirkt, worauf nachstehend noch im Detail eingegangen wird.

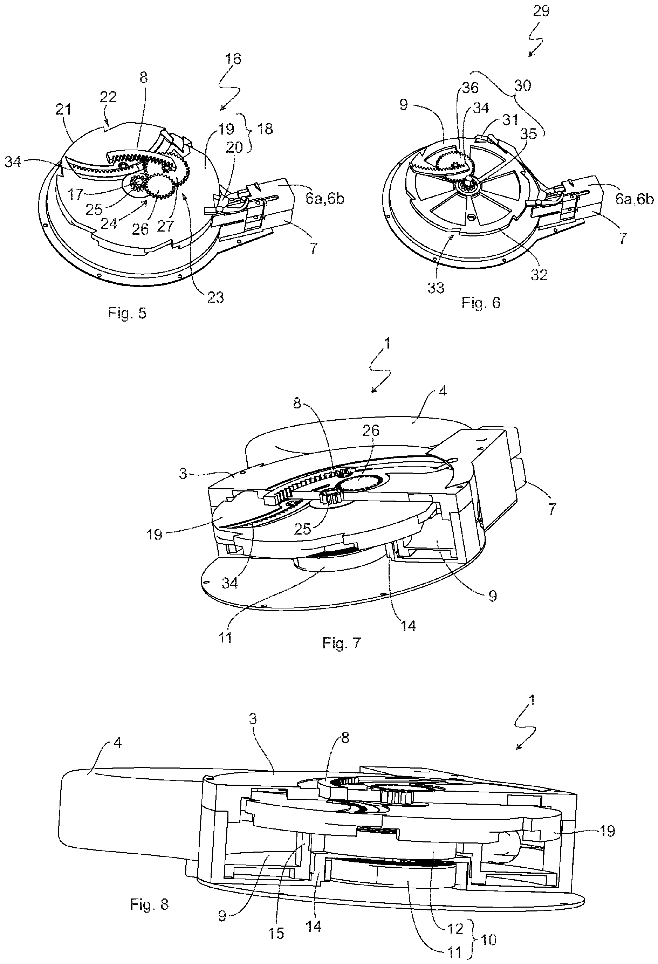

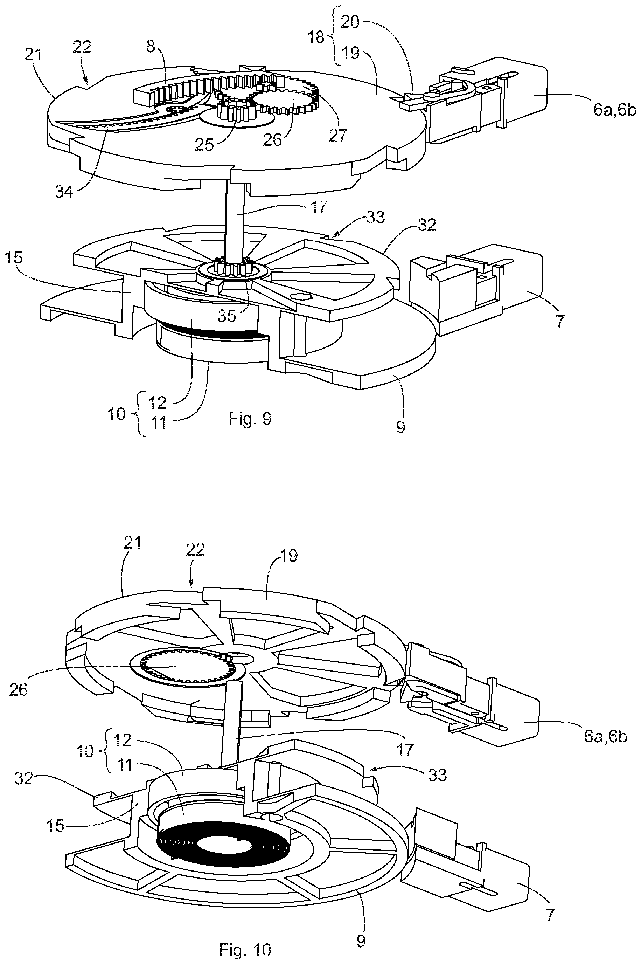

An dem Gehäuse 3 ist ein Spulenkörper 9 angeordnet, welcher drehbar an bzw. innerhalb des Gehäuses 3 gelagert ist, wie es beispielsweise die Figuren 8, 9 und 10 zeigen, wobei in den Figuren 9 und 10 das Gehäuse 3 aus Gründen einer besseren Übersichtlichkeit weggelassen wurde. Der Spulenkörper 9 ist mit Hilfe eines Federsystems 10 in einer Aufrollposition gehalten. In der Aufrollposition ist die Tierleine 2 auf dem Spulenkörper 9 aufgewickelt angeordnet. Das Federsystem 10 hält folglich die Tierleine 2 in der Aufrollposition zurück. Ein Abrollen der Tierleine 2 ist gegen die Kraft des Federsystems 10 möglich, beispielsweise wenn sich ein an der Tierleine 2 angeleinte Tier von dem Leinenführer entfernt. Nähert sich das Tier wieder dem Leinenführer, so sorgt das Federsystem 10 dafür, dass der Spulenkörper 9 in die Aufrollposition zurückgedrängt wird und die Tierleine 2 wieder auf dem Spulenkörper 9 aufgewickelt angeordnet ist. Das Federsystem 10 (siehe zum Beispiel Figuren 8, 9 und 10) ist mit einer ersten Rückholkraft und mit einer zweiten Rückholkraft ausgebildet, wobei die zweite Rückholkraft größer ist bzw. stärker ausgebildet ist als die erste Rückholkraft. Erfindungsgemäß ist das Federsystem 10 derart ausgebildet, dass der Spulenkörper 10 aus der Aufrollposition heraus gegen die erste Rückholkraft für einen ersten Abwickelungsweg der Tierleine 2 drehbar ist. Dabei ist der erste Abwicklungsweg durch eine festgelegte Anzahl an Umdrehungen des Spulenkörpers 9 definiert. Das Federsystem 10 ist darüber hinaus derart ausgebildet, dass der Spulenkörper 9 gegen die zweite Rückholkraft für einen zweiten Abwickelungsweg der Tierleine 2 drehbar ist, wobei sich der zweite Abwicklungsweg an den ersten Abwicklungsweg anschließt und wobei der zweite Abwicklungsweg ebenfalls durch eine festgelegte Anzahl an Umdrehungen des Spulenkörpers 9 definiert ist. Das angeleinte Tier wird somit über den ersten Abwicklungsweg einen moderaten Widerstand durch die erste Rückholkraft spüren, wobei dann das Tier bei einem Wechsel auf den zweiten Abwicklungsweg einen stärkeren Widerstand durch die zweite Rückholkraft spüren wird. Das Tier verbindet somit nach einer Anlernphase den stärkeren Widerstand durch die zweite Rückholkraft mit dem Erreichen des Leinenendes, was einen starken und unangenehmen Ruck verursacht, so dass das Tier den unangenehmen Ruck zu vermeiden lernen kann.

Das zum Beispiel in den Figuren 8, 9 und 10 gezeigte Federsystem weist eine erste Rückholfeder 11 und eine zweite Rückholfeder 12 auf. Die erste Rückholfeder 11 weist dabei die erste (schwache) Rückholkraft auf und ist mit einem ersten Ende mit dem Gehäuse 3 verbunden. Die zweite Rückholfeder 12 weist die zweite (stärkere) Rückholkraft auf und ist einem ersten Ende mit dem Spulenkörper 9 verbunden. Wie beispielsweise der Figur 8 zu entnehmen ist, ist die erste Rückholfeder 11 in einem Gehäuseabschnitt 14 untergebracht, welcher dosenförmig ausgebildet ist. Die zweite Rückholfeder 12 ist demgegenüber in einem radial innenliegenden Spulenabschnitt 15 des Spulenkörpers 9 angeordnet. Die erste Rückholfeder 11 ist bei dem vorliegenden Ausführungsbeispiel als eine Konstantkraftfeder ausgebildet, wobei auch die zweite Rückholfeder 12 als eine Konstantkraftfeder ausgebildet ist. Eine Konstantkraftfeder weist den Vorteil auf, dass sie über eine große Anzahl von Umdrehungen des Spulenkörpers eine nahezu konstante Rückholkraft ausübt. Die erste Rückholfeder 11 und die zweite Rückholfeder 12 sind über eine Kopplungsvorrichtung 16 (mit der geschlitzten Welle 17) kaskadiert miteinander gekoppelt. Die kaskadierte Kopplung der ersten Rückholfeder 11 und der zweiten Rückholfeder 12 bedeutet im Sinne der Erfindung eine Hintereinanderschaltung der beiden Rückholfedern 11 und 12, so dass zunächst bei einem Abrollvorgang der Tierleine 2 entlang des ersten Abwickelungsweges die erste Rückholfeder 11 gegen ein Abrollen wirkt (weil sie das schwächere Rückholdrehmoment aufweist) und erst ab einem definierten oder gewünschten Ende des ersten Abwickelungsweges die zweite Rückholfeder 12 gegen das Abrollen der Tierleine 2 für den zweiten Abwickelungsweg wirkt. Die zweite Rückholkraft der zweiten Rückholfeder 12 ist größer als die erste Rückholkraft der ersten Rückholfeder 11, so dass das Tier entlang des zweiten Abwickelungswegs einen größeren Widerstand spüren wird.

Die Kopplungsvorrichtung 16 weist eine Welle 17 auf, welche in den Figuren 9 und 10 gezeigt ist und welche geschlitzt ausgebildet ist. Die Welle 17 ist an dem Gehäuse 3 freidrehend gelagert und erstreckt sich durch das Zentrum des Spulenkörpers 9. Dabei ist ein zweites Ende der ersten Rückholfeder 11 mit der Welle 17 verbunden, wobei auch das zweite Ende der zweiten Rückholfeder 12 mit der Welle verbunden ist. Mit Hilfe der Kopplungsvorrichtung 16 wird somit realisiert, dass bei einer Bewegung entlang des ersten Abwickelungswegs der Spulenkörper 9 gegen die erste Rückholkraft bewegend ausgebildet ist, wobei bei einer Bewegung entlang des ersten Abwickelungswegs die Welle 17 eine Abrollkraft des Spulenkörpers 9 über die zweite Rückholfeder 12 auf die erste Rückholfeder 13 übertragend ausgebildet ist. Entsprechend ist bei einer Bewegung entlang des ersten Abwickelungswegs die zweite Rückholfeder 12 derart (mit einer größeren Konstantkraft als die erste Rückholfeder 11) ausgebildet, dass sich die zweite Rückholfeder 12 nahezu nicht verformt, sondern im Wesentlichen gemeinsam mit dem Spulenkörper 9 bewegt.

Gemäß dem in den Figuren gezeigten Ausführungsbeispiel wird die Kaskadierung der ersten Rückholfeder 11 und der zweiten Rückholfeder 12 dadurch umgesetzt, dass die Kopplungsvorrichtung 16 eine Steuervorrichtung 18 aufweist, welche einen Wechsel von dem ersten Abwickelungsweg zu dem zweiten Abwickelungsweg steuernd ausgebildet ist und welche einen mit der Welle 17 drehfest verbundenen Steuerkörper 19 und einen an dem Gehäuse 3 gelagerten Sperrkörper 20 (siehe zum Beispiel Figuren 5 und 6) aufweist. Der Steuerkörper 19 ist scheibenförmig ausgebildet und zum Beispiel aus den Figuren 5, 9 und 10 ersichtlich. Ferner weist der Steuerkörper 19 einen verbreiterten Umfangsrand 21, wobei in den Umfangsrand 21 über den Umfang verteilt Ausnehmungen 22 ausgebildet sind. Der verbreiterte Umfangsrand 21 ist derart ausgebildet, dass der Steuerkörper 19 auf dem Spulenkörper 9 aufliegt und relativ zu dem Spulenkörper 9 drehbar ist. Der Sperrkörper 20 ist nach Art einer Sperrklinke ausgebildet und ist zwischen einer Grundposition und einer Sperrposition bewegbar an dem Gehäuse 3 gelagert. In der Grundposition ist der Sperrkörper 20 eine Bewegung des Steuerkörpers 19 relativ zu dem Gehäuse 3 freigebend angeordnet, wohingegen in der Sperrposition der Sperrkörper 20 eine Bewegung des Steuerkörpers 19 relativ zu dem Gehäuse 3 blockierend angeordnet ist. Somit ist in der Sperrposition eine Drehbewegung des Steuerkörpers 19 blockiert und der Steuerkörper 19 an dem Gehäuse festgelegt. Entlang des ersten Abwicklungswegs sind der Spulenkörper 9, die zweite Rückholfeder 12 und der Steuerkörper 19 sich gemeinsam bewegend und/oder drehend ausgebildet sind. Mit anderen Worten drehen sich mit Hilfe der Kopplungsvorrichtung 16 bei einem Abrollvorgang entlang des ersten Abwicklungswegs der Spulenkörper 9, die zweite Rückholfeder 12 und der Steuerkörper 19 gemeinsam.

Die Kopplungsvorrichtung 16 weist ferner eine Steuermechanik 23 auf, welche bei einem Erreichen eines Endes des ersten Abwicklungsweges den Sperrkörper 20 aus der Grundposition in die Sperrposition bewegend ausgebildet ist. Bei dem in den Figuren gezeigten Ausführungsbeispiel umfasst die Steuermechanik 23 die Zahnstange 8, welche über eine Getriebevorrichtung 24 mit der drehfest mit dem Steuerkörper 19 verbundenen Welle 17 bewegungsverbunden ist. In dem in den Figuren gezeigten Ausführungsbeispiel umfasst die Getriebevorrichtung 24 ein fest mit der Welle 17 verbundenes Zahnrad 25, ein erstes Stufenzahnrad 26 und ein zweites Stufenzahnrad 27, so dass die Welle 17 über die Getriebevorrichtung 24 mit der Zahnstange 8 mechanisch bewegungsverbunden ist. Eine Drehung der Welle 17 bei einem Abrollvorgang entlang des ersten Abwickelungswegs wird somit über die Getriebevorrichtung 24 auf die Zahnstange 8 übertragen, welche in einer Ausnehmung des Gehäuses 3 bewegungsgeführt gelagert ist (siehe zum Beispiel Figuren 7 und 8). Dabei wird die Zahnstange 8 in Richtung des Sperrkörpers 19 bewegt, wobei an dem Ende des ersten Abwickelungswegs die Zahnstange 8 mit einem Ende gegen den klinkenartig ausgebildeten Sperrkörper 20 drückt und dabei den Sperrkörper 20 aus der Grundposition in die Sperrposition verlagert. In der Sperrposition fällt eine Klinke 28 des Sperrkörpers 20 eine der Ausnehmungen 22 des Umfangsrandes 21 des Steuerkörpers 19 ein, so dass eine Drehung des Steuerkörpers 19 blockiert ist, wenn der Abrollvorgang der Tierleine 2 andauert. Die Kopplungsvorrichtung 16 weist ferner den Steuerschalter 6 auf, welcher von einem Bediener bzw. dem Leinenführer betätigbar ausgebildet ist und welcher mit dem Sperrkörper 20 derart bewegungsgekoppelt ist, dass eine Betätigung des Steuerschalters 6 vor einem Erreichen eines Endes des ersten Abwickelungswegs den Sperrkörper 20 aus der Grundposition in die Sperrposition bewegt. Der Steuerschalter ist an dem Gehäuse 3 angeordnet und bewegbar gelagert. Die Klinke 28 des Sperrkörpers 20 kann mittels einer Feder in die Grundposition gedrängt oder gehalten sein, so dass entweder die Bewegung der Zahnstange 9 oder die Betätigung des Steuerschalters 6 die Klinke 28 aus der Grundposition in die Sperrposition drängt, wobei der Steuerkörper 19 in der Sperrposition des Sperrkörpers 20 eine Drehung der Welle 17 blockiert und die zweite Rückholfeder 12 aktiviert ist.

Ferner ist bei der in den Figuren gezeigten Rollleinenvorrichtung 1 eine Blockierungsvorrichtung 29 vorgesehen, welche eine Blockierungsmechanik 30 und einen Blockierungskörper 31 aufweist, wie es zum Beispiel aus den Figuren 5 und 9 ersichtlich ist. Bei dem gezeigten Ausführungsbeispiel ist der Blockierungskörper 31 an dem scheibenförmig ausgebildeten Steuerkörper 19 zwischen einer Freigabeposition und einer Blockierungsposition bewegbar gelagert. In der Freigabeposition ist der Spulenkörper 9 relativ zu dem Steuerkörper 19 drehbar gelagert, wohingegen in der Blockierungsposition der Blockierungskörper 31 eine Bewegung des Spulenkörpers 9 relativ zu dem Steuerkörper 19 blockiert. Der Blockierungskörper 31 ist klinkenartig ausgebildet, wobei eine scheibenförmige Wandung 32 des Spulenkörpers 9 an ihrem äußeren Umfang mit Ausnehmungen 33 versehen ist. In der Blockierungsposition greift der klinkenartig ausgebildete Blockierungskörper 31 in eine der Ausnehmungen 33 ein. Die Blockierungsmechanik 30 ist dabei derart ausgebildet, dass durch die Blockierungsmechanik 30 bei einem Erreichen eines Endes des zweiten Abwicklungswegs der Blockierungskörper 31 aus der Freigabeposition in die Blockierungsposition bewegt wird. Bei dem in den Figuren gezeigten Ausführungsbeispiel umfasst die Blockierungsmechanik 30 eine Blockierungszahnstange 34, welche in einer Ausnehmung des Steuerkörpers 19 bewegungsgeführt gelagert ist, ein erstes Blockierungszahnrad 35, welches in dem Zentrum des Spulenkörpers 9 ausgebildet ist, und ein Blockierungs-Stufenzahnrad 36, welches an dem Steuerkörper 19 außermittig zu dem Zentrum des Steuerkörpers 19 drehbar gelagert ist. Bei einem Abrollvorgang entlang des ersten Abwicklungswegs drehen sich der Spulenkörper 9 und der Steuerkörper 19 gemeinsam, so dass die gesamte Blockierungsmechanik 30 unbewegt verbleibt. Beim Wechsel zu dem zweiten Abwicklungsweg ist der Steuerkörper 19 an dem Gehäuse 3 festgelegt, so dass sich das fest an dem Spulenkörper 9 angebrachte Blockierungszahnrad 35 gemeinsam mit dem Spulenkörper 9 dreht, wenn sich die Tierleine 2 weiter abwickelt. Dabei treibt das Blockierungszahnrad 35 das Blockierungs-Stufenzahnrad 36 an, welches wiederum die Blockierungszahnstange 34 antreibt, so dass die Blockierungszahnstange 34 in Richtung des Blockierungskörpers 31 bewegt wird und schließlich am Ende des zweiten Abwickelungswegs den Blockierungskörper 31 aus der Freigabeposition in die Blockierungsposition bewegt. In der Blockierungsposition des Blockierungskörpers 31 greift dann der klinkenartig ausgebildete Blockierungskörper 31 in eine der Ausnehmungen 33 ein, so dass eine Bewegung bzw. Drehung des Spulenkörpers 9 blockiert ist und ein weiteres Abrollen der Tierleine 2 blockiert ist.

Ein Blockieren und Abrollen der Tierleine 2 kann aber auch vor dem Erreichen des Endes des zweiten Abwickelungswegs realisiert werden. Zu diesem Zweck ist der von einem Bediener betätigbar ausgebildeter und an dem Gehäuse 3 gelagerter Blockierungsschalter 6 vorgesehen, welcher bei dem gezeigten Ausführungsbeispiel auch gleichzeitig der Steuerschalter 6 ist. Während für einen vorzeitigen Wechsel vom ersten Abwickelungsweg auf den zweiten Abwickelungsweg der Steuerschalter bzw. Blockierungsschalter 6 nur halb einwärts gedrückt wird, wird der Steuerschalter bzw. Blockierungsschalter 6 für eine vorzeitige Blockierung der Drehung des Spulenkörpers 9 vollständig eingedrückt, wodurch eine klinkenartig ausgebildeten Blockierungsmittel 37 in eine der Ausnehmungen 33 des Spulenkörpers 9 eingreift und den Spulenkörper 9 an einer weiteren Drehung blockiert. Der Steuerschalter bzw. Blockierungsschalter 6 ist folglich mit dem an dem Gehäuse 3 gelagerten Blockierungsmittel 37 derart bewegungsgekoppelt, dass eine Betätigung des Blockierungsschalters 6 vor einem Erreichen des Endes des zweiten Abwickelungswegs das Blockierungsmittel 37 aus einer Neutralstellung, in welcher das Blockierungsmittel 37 eine Bewegung des Spulenkörpers 9 relativ zu dem Gehäuse 3 erlaubend angeordnet ist, in eine Blockierungsstellung, in welcher das Blockierungsmittel 39 eine Bewegung des Spulenkörpers 9 relativ zu dem Gehäuse 3 blockierend angeordnet ist, bewegend ausgebildet ist.

Schließlich ist bei dem in den Figuren gezeigten Ausführungsbeispiel der von einem Bediener betätigbar ausgebildeter und an dem Gehäuse 3 bewegbar gelagerter Bremsschalter 7 mit einem Bremsmittel 38 vorgesehen. Der Bremsschalter 7 ist zwischen einer Ruhestellung, in welcher das als Bremsbacke ausgebildete Bremsmittel 38 beabstandet zu dem Spulenkörper 9 angeordnet ist, und einer Bremsstellung, in welcher das Bremsmittel 38 gegen den Spulenkörper 9 drückend angeordnet ist, bewegbar an dem Gehäuse 3 gelagert.

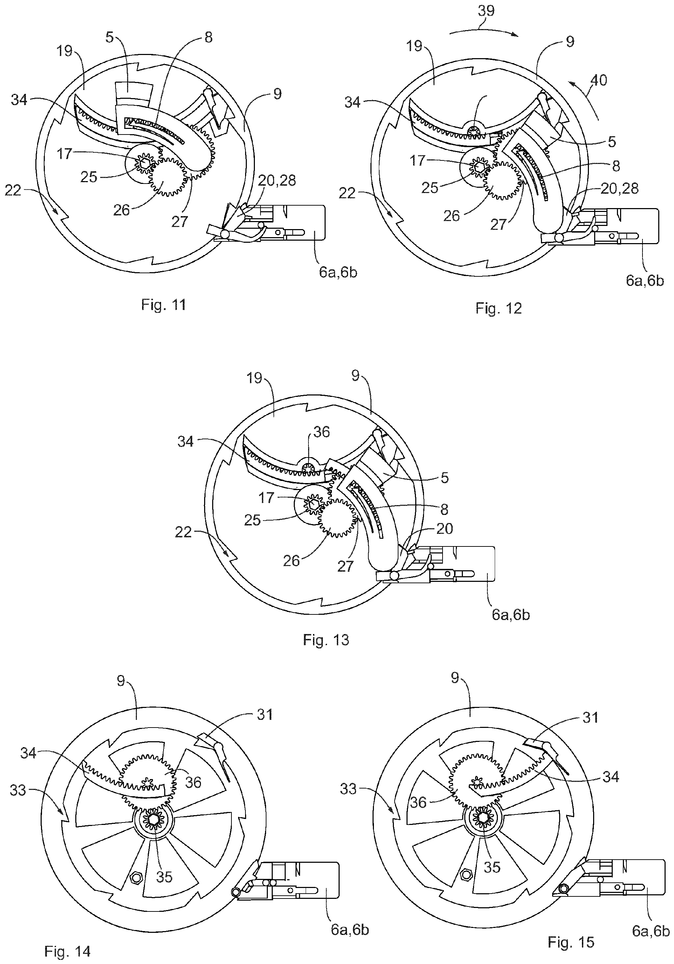

Nachstehend wird die Funktionsweise der erfindungsgemäßen Rollleinenvorrichtung 1 anhand der Figuren 11 bis 21 beschrieben.

In Figur 12 ist der Spulenkörper 9 in seiner Aufrollposition angeordnet und die Tierleine 2 auf dem Spulenkörper 9 aufgerollte angeordnet. Der Sperrkörper 20 bzw. die Klinke 28 sind in ihrer Grundposition angeordnet, so dass der Steuerkörper 19 sich frei drehen kann. Wenn sich nun das an der Tierleine 2, welche an dem Spulenkörper 9 fixiert ist, angeleinte Tier von dem Benutzer bzw. Leinenführer entfernt, dann wickelt sich die Tierleine 2 für den ersten Abwickelungsweg von dem Spulenkörper 9 ab. Die erste Rückholfeder 11 ist mit dem Gehäuse 3 und mit der freidrehend im Gehäuse 3 gelagerten Welle 17 verbunden. Die Welle 17 erstreckt sich durch das Gehäuse 3 und den Spulenkörper 9 und ist mit der zweiten Rückholfeder 12 verbunden, welche ferner mit dem Spulenkörper 9 verbunden ist. Auf diese Weise sind die erste Rückholfeder 11 und die zweite Rückholfeder 12 kaskadiert. Da die erste Rückholkraft der ersten Rückholfeder 11 kleiner als die zweite Rückholkraft der zweiten Rückholfeder 12 ist, wird sich über den ersten Abwicklungsweg nur die erste Rückholfeder 11 verformen, während die zweite Rückholfeder 12 fast ohne Spannung verbleibt, so dass sich die Baugruppe von zweite Rückholfeder 12, Welle 17 Spulenkörper 9 gemeinsam drehen. Die Welle 17, welche mit dem Steuerkörper 19 drehfest verbunden ist, wird am Ende des ersten Abwickelungswegs und damit nach einer festgelegten Anzahl an Umdrehungen des Spulenkörpers 9 automatisch blockieren. Dieses automatische Blockieren wird durch die Steuervorrichtung 18 und durch die Steuermechanik 23 realisiert, wobei die Steuervorrichtung 18 den scheibenförmig ausgebildeten Steuerkörper 19 aufweist, welcher zwischen dem Spulenkörper 9 und dem Gehäuse 3 angeordnet ist und welcher mit der Welle 17 drehfest verbunden ist. Die sich bei einem Abrollvorgang entlang des ersten Abwickelungswegs drehende Welle 17 treibt die Steuermechanik 23 an. Dabei wird über die Getriebevorrichtung 24 am Ende des erste Abwickelungswegs der Sperrkörper 20 aus seiner Grundposition in die Sperrposition gedrängt. Mit der Getriebevorrichtung 24, welche das Zahnrad 25, das erste Stufenzahnrad 26, das zweite Stufenzahnrad 27 und die Zahnstange 8 aufweist, wird infolge der Drehung der Welle 17 die Zahnstange 8 bewegt, welche in einer Ausnehmung in dem Gehäuse 3 bewegungsgeführt gelagert ist. Auf der Zahnstange 8 ist das Einstellmittel 5 aufgesteckt, welches sich bei der Bewegung der Zahnstange 8 mit der Zahnstange 8 mitbewegt.

In Figur 12 ist das Ende des ersten Abwickelungswegs erreicht, wobei das auf der Zahnstange 8 aufgesteckte und mit der Zahnstange 8 mitbewegte Einstellmittel 5 gegen einen Hebelarm drückt, welcher mit dem an dem Gehäuse 3 bewegbar gelagerten Sperrkörper 20 bzw. der Klinke 28 gekoppelt ist. Am Ende des ersten Abwicklungswegs drückt damit die Zahnstange 8 bzw. das mit der Zahnstange 8 mitbewegte Einstellmittel 5 automatisch und ohne eine Handlung des Leinenführers den Sperrkörper 20 aus seiner Grundposition in seine Sperrposition. In der Sperrposition des Sperrkörpers 20 blockiert der Sperrkörper 20 eine Drehung des Steuerkörpers 19, so dass der Steuerkörper 19 an dem Gehäuse 3 festgelegt bzw. festgehalten ist. Der Sperrkörper 20 greift somit in seiner Sperrposition in eine der Ausnehmungen 22 des Steuerkörpers 19 ein.

Die Figur 13 zeigt eine im Vergleich zur Figur 12 andere Anordnung des Einstellmittels 5 an der Zahnstange 8. In der Figur 13 ist das Einstellmittel 5 derart verlagert an der Zahnstange 8 angeordnet, dass der Sperrkörper 20 im Vergleich zu Figur 12 früher aus seiner Grundposition in die Sperrposition bewegt wird, wodurch sich ein kürzerer, erster Abwicklungsweg ergibt, da der Steuerkörper 19 bereits nach einer geringeren Anzahl an Umdrehungen des Spulenkörpers 9 automatisch blockiert wird.

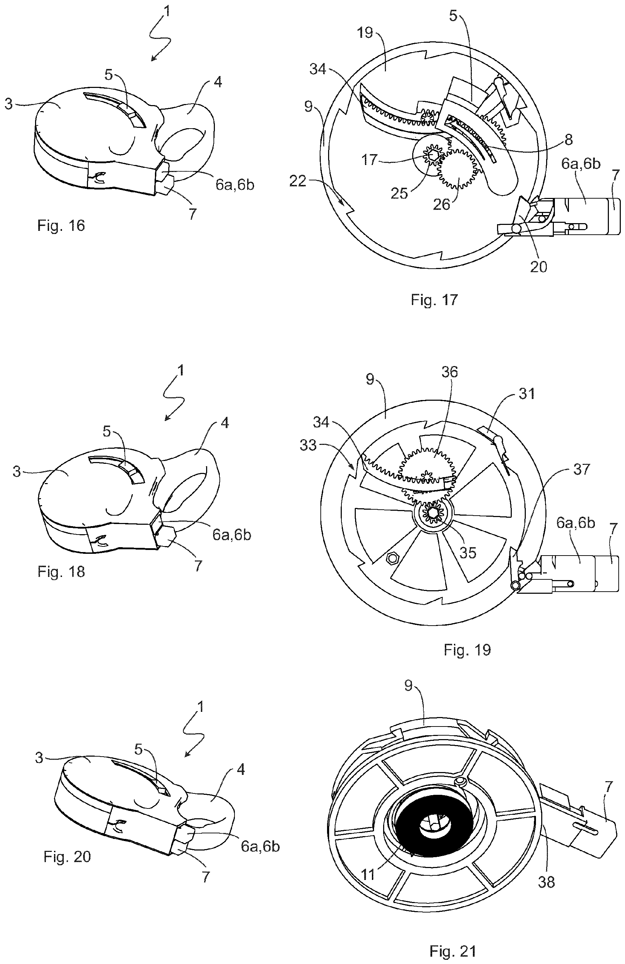

Eine Blockierung des Steuerkörpers 19 kann aber auch vor dem Erreichen des Endes des ersten Abwicklungswegs und durch den Leinenführer realisiert werden. Hierzu ist der Steuerschalter 6a vorgesehen, welcher derart ausgebildet ist, dass bei einer Betätigung bzw. Drücken des Steuerschalters 6a der Sperrkörper 20 aus seiner Grundposition in seine Sperrposition bewegt wird. Für die Bewegung des Sperrkörpers 20 muss der Steuerschalter 6a nur für einen kurzen und ersten Betätigungsweg einwärts in Richtung des Gehäuses 3 gedrückt werden, wie es in den Figuren 16 und 17 gezeigt ist. Wie insbesondere aus der Figur 17 hervorgeht, sind die Zahnstange 8 und das daran angeordnete Einstellmittel 5 mit einem Abstand zu dem Sperrkörper 20 angeordnet, woraus hervorgeht, dass das Ende des ersten Abwicklungswegs noch nicht erreicht ist. Somit bewirkt die manuelle und durch den Leinenführer bewirkte Betätigung des Steuerschalters 6a eine Blockierung des Steuerkörpers 19 vor dem Erreichen des erste Abwicklungswegs.

Unabhängig davon, ob der Steuerkörper 19 automatisch am Ende des ersten Abwicklungswegs oder manuell von dem Leinenführer vor dem Ende des ersten Abwicklungswegs blockiert an dem Gehäuse 3 festgelegt ist, so kann sich der Spulenkörper 9 dennoch weiterdrehen und die Tierleine 2 weiter abrollen, wenn sich das angeleinte Tier noch weiter von dem Leinenführer entfernt. Allerdings dreht sich der Spulenkörper 9 dann gegen die zweite Rückholkraft der stärkeren, zweiten Rückholfeder 12 und entlang des zweiten Abwickelungswegs, so dass das Blockieren des Steuerkörpers 19 einen Wechsel von dem ersten Abwickelungsweg zu dem zweiten Abwickelungsweg darstellt. Die Figur 14 zeigt eine Draufsicht auf den Spulenkörper 9 für den Wechsel von dem ersten Abwickelungsweg zu dem zweiten Abwickelungsweg, wohingegen die Figur 15 eine Draufsicht auf den Spulenkörper 9 für das Erreichen des Endes des zweiten Abwicklungswegs darstellt. Bei dem Wechsel von dem ersten Abwickelungsweg zu dem zweiten Abwickelungsweg ist der Sperrkörper 20 in der Sperrposition angeordnet und der Steuerkörper 19 ist gegenüber dem Gehäuse 3 feststehend angeordnet ist, wohingegen der Spulenkörper 9 weiterhin drehbar gelagert ist. Am Ende des zweiten Abwicklungswegs ist eine Blockierung der Drehung des Spulenkörpers 9 erwünscht, so dass ein weiteres Abwickeln der Tierleine 2 unterbunden ist. Diesbezüglich weist die Rollleinenvorrichtung 1 die Blockierungsvorrichtung 29 auf, welche dann das "harte Ende" der Tierleine 2 bewirkt, welches für das Tier aber nicht mehr überraschend kommt, da das Tier vorher den Zug der zweiten, stärkeren Rückholfeder 12 gespürt hat. Bei dem Abrollen der Tierleine 2 entlang des zweiten Abwickelungswegs ist nun die Blockierungsmechanik 30 aktiv, welche entlang des ersten Abwickelungswegs inaktiv war, da sich der Spulenkörper 9 und der Steuerkörper 19 gemeinsam gedreht hatten und der Spulenkörper 9 sich nicht relativ zu dem Steuerkörper 19 bewegte. Die Blockierungszahnstange 34 ist an dem Steuerkörper 19 bewegungsgeführt gelagert, wobei das Blockierungs-Stufenzahnrad 36 drehbar an dem Steuerkörper 19 gelagert ist. Das Blockierungs-Stufenzahnrad 36 steht mit dem Blockierungszahnrad 35, welches fest an dem Spulenkörper 9 ausgebildet ist, in Eingriff. Eine Relativbewegung des Spulenkörpers 9 zu dem Steuerkörper 19 bewirkt damit, dass sich die Blockierungszahnstange 34 infolge der Blockierungsmechanik 30 bewegt und in Richtung des Blockierungskörpers 31, welcher an dem Steuerkörper 19 zwischen der Freigabeposition und Blockierungsposition bewegbar gelagert ist, bewegt wird. Am Ende des zweiten Abwickelungswegs drängt ein Längsende der Blockierungszahnstange 34 den Blockierungskörper 31 aus der Freigabeposition (siehe Figur 14) in die Blockierungsposition (siehe Figur 15), in welcher der klinkenartig ausgebildete Blockierungskörper 31 in einer der Ausnehmungen 33 des Spulenkörpers 9 eingreift und eine weitere Drehung des Spulenkörpers 9 automatisch und ohne eine Handlung des Leinenführers blockiert.

Auch für die Blockierungsvorrichtung 29 besteht die Möglichkeit, dass der Leinenführer vor dem Erreichen des Endes des zweiten Abwickelungswegs ein Abrollen der Tierleine 2 manuell blockieren kann. Zu diesem Zweck ist der Blockierungsschalter 6b vorgesehen, welcher in dem in den Figuren gezeigten Ausführungsbeispiel dem Steuerschalter 6a entspricht. Während der Steuerschalter 6a bzw. Blockierungsschalter 6b für ein manuelles Blockieren des Steuerkörpers 19 nur zum Teil einwärts in Richtung des Gehäuses 3 von dem Leinenführer gedrückt werden muss, um ein vorzeitiges Ende des ersten Abwicklungswegs einzuleiten, muss der der Steuerschalter 6a bzw. Blockierungsschalter 6b für ein manuelles Blockieren des Spulenkörpers 9 noch weiter einwärts in Richtung des Gehäuses 3 gedrückt werden, wie es aus den Figur 18 im Vergleich zur Figur 16 ersichtlich ist. Dabei wird das Blockierungsmittel 37 aus seiner Neutralstellung in die Blockierungsstellung (siehe Figur 19) bewegt, in welcher das klinkenartig ausgebildete Blockierungsmittel 37 in eine der Ausnehmungen 33 des Spulenkörpers 9 eingreift und den Spulenkörper 9 blockiert, bevor das Ende des zweiten Abwickelungswegs erreicht ist.

Die Ausnehmungen 22 in dem Steuerkörper 19 und die Ausnehmungen 33 in dem Spulenkörper 9 sind jeweils derart schräg verlaufend ausgebildet, dass in Abrollrichtung 39 (siehe Figur 12) der Tierleine 2 der Sperrkörper 20 in einer der Ausnehmungen 22 und der Blockierungskörper 31 oder das Blockierungsmittel 38 in einer der Ausnehmungen 33 verkeilt angeordnet sind, wohingegen in Aufrollrichtung 40 (siehe Figur 12) der Sperrkörper 20 aus einer der Ausnehmungen 22 und der Blockierungskörper 31 oder das Blockierungsmittel 37 aus einer der Ausnehmungen 33 herausgleitet. Die Blockierung des Steuerkörpers 19 und die Blockierung des Spulenkörpers 9 sind somit mit einer Art Ratschenfunktion ausgebildet, so dass in dem Fall, wo das Tier zum Leinenführer zurückkehrt, die Tierleine 2 automatisch wieder auf den Spulenkörper 9 aufgewickelt wird und nicht auf dem Boden zum Liegen kommt. Das Aufrollen der Tierleine 2 erfolgt bei der erfindungsgemäßen Rollleinenvorrichtung 1 auch dann, wenn der Steuerschalter 6a bzw. der Blockierungsschalter 6b oder der Bremsschalter 7 gedrückt ist, denn die Blockierung wirkt nur in Abrollrichtung 39, wohingegen durch die Ratschenfunktion die Schalter 6a, 6b und 7 in Aufrollrichtung 40 ohne Funktion sind und ein Aufrollen nicht verhindern, sondern die erste und zweite Rückholkraft der ersten und zweiten Rückholfedern 11 und 12 den Spulenkörper 9 zurück in die Aufrollposition drängen.

Unabhängig davon, kann bei einem Abrollvorgang der Tierleine 2 ein manuelles Bremsen durch den Leinenführer bewirkt werden. Hierzu ist der Bremsschalter 7 vorgesehen, welcher parallel zu dem Steuerschalter 6a bzw. Blockierungsschalter 6b an dem Gehäuse 3 bewegbar gelagert ist und zur Betätigung durch den Leinenführer einwärts in Richtung des Gehäuses 3 gedrückt werden kann, um zumindest die Geschwindigkeit des Abrollens der Tierleine 2 zu reduzieren. Wenn der Bremsschalter 7 von dem Leinenführer gedrückt wird, dann gelangt das mit dem Bremsschalter 7 bewegungsgekoppelte Bremsmittel 38, welches nach Art einer Bremsbacke ausgebildet ist, in Anlage an den Spulenkörper 9 und bremst dessen Abrollvorgang ab.

Die vorstehende Beschreibung der erfindungsgemäßen Rollleinenvorrichtung 1 richtet sich auf ein konkretes Ausführungsbeispiel, wobei es für den Fachmann ersichtlich ist, dass zahlreiche Abwandlungen für das konkrete Ausführungsbeispiel möglich sind. Beispielsweise kann gemäß einer anderen Ausführungsform die Zahnstange 8 alternativ auch an dem Steuerkörper 19 bewegungsgeführt gelagert sein, wobei auch die Blockierungszahnstange 34 statt an dem Steuerkörper 19 an dem Spulenkörper 9 bewegungsgeführt gelagert sein kann. Auch können gemäß anderer Ausführungsformen für die Steuervorrichtung 18 und/oder die Getriebevorrichtung 24 und/oder die Blockierungsvorrichtung 29 zum Beispiel auch Planetengetriebe, zykloide Getriebe, harmonische Getriebe, Schneckengetriebe oder Schrittgetriebe oder eine Kombination verschiedener Getriebetypen zum Einsatz kommen.

Ebenso kann gemäß einer denkbaren Ausführungsform die Ratschenfunktion nicht an dem Umfangsrand von Steuerkörper 19 und Spulenkörper 9, sondern stattdessen auf Stirnseiten, also den Flächen, der scheibenförmigen Bauteile ausgebildet sein. Auch können die Ratschen bzw. als Ratschen wirkenden Ausnehmungen 22 und 33 von Steuerkörper 19 und Spulenkörper 9 nicht konzentrisch ineinander liegend, sondern nebeneinander angeordnet sein.

Noch weitere Ausführungsformen sind für die Realisierung der Erfindung denkbar. Denn für das Federsystem mit kaskadiert gekoppelten Rückholfedern können die Mechanismen, welchen den ersten Abwicklungsweg und den zweiten Abwicklungsweg steuern, auf viele Weisen ausgebildet sein. Beispielsweise können die Steuervorrichtung 18 mit dem Steuerkörper 19, welche für den ersten Abwicklungsweg und den Wechsel auf den zweiten Abwicklungsweg verantwortlich sind, oder die Blockierungsvorrichtung 29 statt mit mehrstufigen Getrieben über einen Schieber, welcher mit Hilfe einer spiralförmigen Führungsrille (nach Art einer "Schallplattenrille") in mehreren Umdrehungen radial nach außen geschoben wird und am Ende den Sperrkörper 20 oder den Blockierungskörper 31 entsprechend verstellt, und/oder über ein Seilzugsystem und/oder realisiert werden, wobei beide Möglichkeiten deutlich weniger Bauteile benötigen und eine einfachere Montage erlauben.

Es ist ersichtlich, dass die Steuervorrichtung 18 und die Blockierungsvorrichtung 29 die Funktion zu erfüllen haben, dass sie nach einer definierten Anzahl von relativen Umdrehungen zweier Bauteile (vorliegend eine definierte Anzahl von Umdrehungen für den mit dem Spulenkörper 9 drehenden Steuerkörper 19 für den ersten Abwicklungsweg und eine definierte Anzahl von Umdrehungen für den Spulenkörper 9 für den zweiten Abwicklungsweg) diese Bauteile gegen weitere Rotation blockieren. Diese Funktionen sind auf verschiedene Arten und abweichend von dem in den Figuren dargestellten Ausführungsbeispiel realisierbar.

Die vorstehend beschriebene Erfindung ist selbstverständlich nicht auf das beschriebene und dargestellte Ausführungsbeispiel und auf die lediglich vorstehend beschriebenen alternativen Ausführungsformen beschränkt. Es ist ersichtlich, dass an der in der Zeichnung dargestellten Ausführungsform und den zusätzlich beschriebenen Ausführungsformen zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

### Bezugszeichenliste

- 1: Rollleinenvorrichtung
- 2: Tierleine
- 3: Gehäuse
- 4: Handgriff
- 5: Einstellmittel
- 6a: Steuerschalter
- 6b: Blockierungsschalter
- 7: Bremsschalter
- 8: Zahnstange
- 9: Spulenkörper
- 10: Federsystem
- 11: erste Rückholfeder
- 12: zweite Rückholfeder
- 14: Gehäuseabschnitt
- 15: Spulenabschnitt
- 16: Kopplungsvorrichtung
- 17: Welle
- 18: Steuervorrichtung
- 19: Steuerkörper
- 20: Sperrkörper
- 21: Umfangsrand
- 22: Ausnehmungen
- 23: Steuermechanik
- 24: Getriebevorrichtung
- 25: Zahnrad
- 26: erstes Stufenzahnrad
- 27: zweites Stufenzahnrad
- 28: Klinke
- 29: Blockierungsvorrichtung
- 30: Blockierungsmechanik
- 31: Blockierungskörper
- 32: scheibenförmige Wandung
- 33: Ausnehmungen
- 34: Blockierungszahnstange
- 35: Blockierungszahnrad
- 36: Blockierungs-Stufenzahnrad
- 37: Blockierungsmittel
- 38: Bremsmittel
- 39: Abrollrichtung
- 40: Aufrollrichtung

## Patentansprüche

1. Rollleinenvorrichtung (1) für das Ab- und Aufrollen einer Tierleine (2), wobei die Rollleinenvorrichtung (1) ein Gehäuse (3), einen Spulenkörper (9), welcher drehbar an dem Gehäuse (3) gelagert ist, und ein Federsystem (10) aufweist, welches den Spulenkörper (9) in eine Aufrollposition, in welcher die Tierleine (2) auf dem Spulenkörper (9) aufgewickelt angeordnet ist, zurückdrängend oder zurückhaltend ausgebildet ist und welches mit einer ersten Rückholkraft und mit einer zweiten Rückholkraft ausgebildet ist,
wobei das Federsystem (10) derart ausgebildet ist, dass der Spulenkörper (9) aus der Aufrollposition heraus gegen die erste Rückholkraft für einen ersten Abwickelungsweg der Tierleine (2), welcher durch eine festgelegte Anzahl an Umdrehungen des Spulenkörpers (9) definiert ist, drehbar ist und dass der Spulenkörper (9) gegen die zweite Rückholkraft, welche größer als die erste Rückholkraft ist, für einen zweiten Abwickelungsweg der Tierleine (2), welcher sich an den ersten Abwickelungsweg anschließt und welcher durch eine festgelegte Anzahl an Umdrehungen des Spulenkörpers (9) definiert ist, drehbar ist.

2. Rollleinenvorrichtung (1) nach Anspruch 1, wobei das Federsystem (10) eine erste Rückholfeder (11), welche die erste Rückholkraft aufweist und welche mit einem ersten Ende mit dem Gehäuse (3) verbunden ist, und eine zweite Rückholfeder (12), welche die zweite Rückholkraft aufweist und welche mit einem ersten Ende mit dem Spulenkörper (9) verbunden ist, aufweist, wobei die erste Rückholfeder (11) und die zweite Rückholfeder (12) über eine Kopplungsvorrichtung (16) kaskadiert miteinander gekoppelt sind.

3. Rollleinenvorrichtung (1) nach Anspruch 2, wobei die erste Rückholfeder (11) als eine Konstantkraftfeder ausgebildet ist und/oder die zweite Rückholfeder (12) als eine Konstantkraftfeder ausgebildet ist.

4. Rollleinenvorrichtung (1) nach Anspruch 2 oder 3, wobei die Kopplungsvorrichtung (16) eine Welle (17) aufweist, welche an dem Gehäuse (3) freidrehend gelagert ist, wobei ein zweites Ende der ersten Rückholfeder (11) mit der Welle (17) verbunden ist, und wobei ein zweites Ende der zweiten Rückholfeder (12) mit der Welle (17) verbunden ist.

5. Rollleinenvorrichtung (1) nach Anspruch 4, wobei bei einer Bewegung entlang des ersten Abwickelungswegs der Spulenkörper (9) gegen die erste Rückholkraft bewegend ausgebildet ist, und wobei bei einer Bewegung entlang des ersten Abwickelungswegs die Welle (17) eine Abrollkraft des Spulenkörpers (9) über die zweite Rückholfeder (12) auf die erste Rückholfeder (11) übertragend ausgebildet ist, und wobei bei einer Bewegung entlang des ersten Abwickelungswegs die zweite Rückholfeder (12) derart ausgebildet ist, dass sich die zweite Rückholfeder (12) gemeinsam mit dem Spulenkörper (9) bewegt.

6. Rollleinenvorrichtung (1) nach Anspruch 4 oder 5, wobei die Kopplungsvorrichtung (16) eine Steuervorrichtung (18) aufweist, welche einen Wechsel von dem ersten Abwickelungsweg zu dem zweiten Abwickelungsweg steuernd ausgebildet ist und welche einen mit der Welle (17) drehfest verbundenen Steuerkörper (19) und einen an dem Gehäuse (3) gelagerten Sperrkörper (20) aufweist, wobei der Sperrkörper (20) in eine Grundposition, in welcher der Sperrkörper (20) eine Bewegung des Steuerkörpers (19) relativ zu dem Gehäuse (3) freigebend angeordnet ist, und in eine Sperrposition, in welcher der Sperrkörper (20) eine Bewegung des Steuerkörpers (19) relativ zu dem Gehäuse (3) blockierend angeordnet ist, bewegbar ausgebildet ist.

7. Rollleinenvorrichtung (1) nach Anspruch 6, wobei entlang des ersten Abwicklungswegs der Spulenkörper (9), die zweite Rückholfeder (12) und der Steuerkörper (19) sich gemeinsam bewegend und/oder drehend ausgebildet sind.

8. Rollleinenvorrichtung (1) nach Anspruch 6 oder 7, wobei entlang des ersten Abwicklungswegs der Sperrkörper (20) in der Grundposition angeordnet ist, und wobei bei dem Wechsel von dem ersten Abwickelungsweg zu dem zweiten Abwickelungsweg der Sperrkörper (20) in der Sperrposition angeordnet ist und der Steuerkörper (19) gegenüber dem Gehäuse (3) feststehend angeordnet ist und der Spulenkörper (9) weiterhin drehbar gelagert ist.

9. Rollleinenvorrichtung (1) nach Anspruch 8, wobei die Kopplungsvorrichtung (16) eine Steuermechanik (23) aufweist, welche bei einem Erreichen eines Endes des ersten Abwicklungsweges den Sperrkörper (20) aus der Grundposition in die Sperrposition bewegend ausgebildet ist.

10. Rollleinenvorrichtung (1) nach Anspruch 9, wobei die Steuermechanik (23) ein Einstellmittel (5) aufweist, welches derart ausgebildet ist, dass das Ende des ersten Abwickelungswegs von einem Bediener verstellbar ist.

11. Rollleinenvorrichtung (1) nach Anspruch 8, 9 oder 10, wobei die Kopplungsvorrichtung (16) einen von einem Bediener betätigbar ausgebildeten Steuerschalter (6) aufweist, welcher mit dem Sperrkörper (20) derart bewegungsgekoppelt ist, dass eine Betätigung des Steuerschalters (6) vor einem Erreichen eines Endes des ersten Abwickelungswegs den Sperrkörper (20) aus der Grundposition in die Sperrposition bewegend ausgebildet ist.

12. Rollleinenvorrichtung (1) nach einem der Ansprüche 7 bis 11, wobei eine Blockierungsvorrichtung (29) vorgesehen ist, welche eine Blockierungsmechanik (30) und einen Blockierungskörper (31) aufweist, wobei der Blockierungskörper (31) an dem Steuerkörper (19) zwischen einer Freigabeposition, in welcher der Spulenkörper (9) relativ zu dem Steuerkörper (19) drehbar gelagert ist, und einer Blockierungsposition, in welcher eine Bewegung des Spulenkörpers (9) relativ zu dem Steuerkörper (19) blockiert ist, bewegbar gelagert ist, und wobei die Blockierungsmechanik (30) bei einem Erreichen eines Endes des zweiten Abwicklungswegs den Blockierungskörper (31) aus der Freigabeposition in die Blockierungsposition bewegend ausgebildet ist.

13. Rollleinenvorrichtung (1) nach einem der vorhergehenden Ansprüche, wobei ein von einem Bediener betätigbar ausgebildeter und an dem Gehäuse (3) gelagerter Blockierungsschalter (6b) vorgesehen ist, welcher mit einem an dem Gehäuse (3) gelagerten Blockierungsmittel (37) derart bewegungsgekoppelt ist, dass eine Betätigung des Blockierungsschalters (6b) vor einem Erreichen eines Endes des zweiten Abwickelungswegs das Blockierungsmittel (37) aus einer Neutralstellung, in welcher das Blockierungsmittel (37) eine Bewegung des Spulenkörpers (9) relativ zu dem Gehäuse (3) erlaubend angeordnet ist, in eine Blockierungsstellung, in welcher das Blockierungsmittel (37) eine Bewegung des Spulenkörpers (9) relativ zu dem Gehäuse (3) blockierend angeordnet ist, bewegend ausgebildet ist.

14. Rollleinenvorrichtung (1) nach einem der vorhergehenden Ansprüche, wobei ein von einem Bediener betätigbar ausgebildeter und an dem Gehäuse (3) bewegbar gelagerter Bremsschalter (7) mit einem Bremsmittel (38) vorgesehen ist, wobei der Bremsschalter (7) zwischen einer Ruhestellung, in welcher das Bremsmittel (39) beabstandet zu dem Spulenkörper (9) angeordnet ist, und einer Bremsstellung, in welcher das Bremsmittel (38) gegen den Spulenkörper (9) drückend angeordnet ist, bewegbar an dem Gehäuse (3) gelagert ist.
